# EUROPÄISCHE PATENTSCHRIFT

(11) **EP 2 646 847 B1**
(45) Veröffentlichungstag und Bekanntmachung des Hinweises auf die Patenterteilung: **19.12.2018**
(21) Anmeldenummer: 11761514.6
(22) Anmeldetag: 22.09.2011
(51) Int. Cl.: G01T 1/29, G02B 26/10, G02B 27/02, G03B 42/02, H04N 1/00, H04N 1/047, H04N 1/053, G06K 15/12, G02B 26/08, H02K 33/16

(54) **VORRICHTUNG UND VERFAHREN ZUM AUSLESEN VON IN EINER SPEICHERLEUCHTSTOFFSCHICHT GESPEICHERTEN RÖNTGENINFORMATIONEN**
DEVICE AND METHOD FOR READING OUT X-RAY INFORMATION STORED IN A LUMINESCENT STORAGE LAYER
DISPOSITIF ET PROCÉDÉ DESTINÉS À LA LECTURE DE DONNÉES RADIOGRAPHIQUES ENREGISTRÉES DANS UNE COUCHE DE MÉMOIRE EN MATIÈRE LUMINESCENTE

(30) Priorität: 03.12.2010 EP 10015266
(43) Veröffentlichungstag der Anmeldung: 09.10.2013
(73) Patentinhaber: AGFA NV, 2640 Mortsel (BE)
(72) Erfinder: REISER, Georg, 80337 München (DE); MAIR, Stephan, 86157 Augsburg (DE)
(74) Vertreter: Linsmeier, Josef
(86) Internationale Anmeldenummer: PCT/EP2011/004757
(87) Internationale Veröffentlichungsnummer: WO 2012/072158

(56) Entgegenhaltungen:
- WO-A1-2011/091093
- WO-A1-2011/091093
- US-A- 4 856 858
- US-A- 5 187 364
- US-A1- 2002 158 537
- US-A1- 2004 256 921
- US-A1- 2007 291 343
- US-A1- 2007 291 343
- US-A1- 2008 055 587
- US-A1- 2008 055 587
- US-A1- 2008 055 587

## Beschreibung

Die vorliegende Erfindung betrifft eine Vorrichtung sowie ein entsprechendes Verfahren zum Auslesen von in einer Speicherleuchtstoffschicht gespeicherten Röntgeninformationen gemäß dem Oberbegriff der unabhängigen Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Bei Vorrichtungen und Verfahren nach dem Stand der Technik wird der Stimulationslichtstrahl zumeist durch einen rotierenden Polygonspiegel abgelenkt und über die Speicherleuchtstoffschicht geführt. Um eine hohe Qualität des ausgelesenen Röntgenbildes zu gewährleisten, ist in der Regel ein Polygonspiegel von hoher optischer und mechanischer Güte erforderlich.

Aus US 2008/0055587 A1 ist bekannt, einen Stimulationslichtstrahl mittels eines Galvanometerspiegels derart abzulenken, dass sich der Lichtstrahl entlang einer Linie über die Speicherleichtstoffplatte bewegt.

Aus WO 2011/091093 A1 ist ein resonanter Scanner bekannt, welcher ein längliches Band und eine Baugruppe aufweist, an welcher ein Spiegel montiert ist.

Aus US 2007/0291343 A1 ist bekannt, die Frequenz und die Position des Gravitationszentrums eines oszillierenden optischen Ablenkelements schnell und gleichzeitig einzustellen, indem mit einem Laserstrahl von einem an einem oszillierenden Teil vorgesehenen Masseneinstellungssteil Material abgetragen wird.

Aus US 2004/256921 A ist bekannt, Resonanzschwingungen einer torsionssteifen Gelenkvorrichtung, etwa eines schwenkbar gelagerten Spiegels, herzustellen und aufrechtzuerhalten. Ein Permanentmagnet, der an dem Schwenkspiegel angebracht ist, wirkt mit einer elektromagnetischen Spule zusammen, die abhängig von Ansteuerimpulsen periodisch mit bzw. von einer Gleichstromversorgung verbunden bzw. getrennt wird, so dass Resonanzschwingungen der Vorrichtung aufrechterhalten werden.

Aus US 2002/158537 A1 ist ein elektromagnetisches Stellglied bekannt, bei dem eine elektromagnetische Triebkraft für eine an einem angetriebenen Glied befestigten beweglichen Komponente kontinuierlich durch eine an einer festen Komponente eingerichteten Steuerspule gesteuert wird, wodurch die bewegliche Komponente ein geringes Gewicht haben kann, und eine hohe Fertigungsgenauigkeit des Stellglieds nicht erforderlich ist.

US 4 856 858 A beschreibt einen optischen Scanner, der eine horizontal angeordnete Basisplatte, eine starr auf der Basisplatte angebrachte Lichtquelleneinheit, die einen Lichtstrahl ausstrahlt, eine optische Abtasteinheit zum Abtasten des Lichtstrahls in einem sich wiederholenden Zyklus und ein optisches System mit einer Einheit zum Leiten des Abtaststrahls zu einer gewünschten zu bestrahlenden Oberfläche aufweist, wobei die optische Abtasteinheit eine Einheitsbasis, einen starr an der Einheitsbasis an den gegenüberliegenden Enden abgestützten Torsionsstab, einen starr auf dem drehbaren Abschnitt der Torsionsstange montierten Rotor mit einem Spiegel zum Reflektieren des Lichtstrahls, einen elektromagnetischen Antriebsmechanismus zum Anwenden einer Rotationsantriebskraft auf den Rotor und einen Einheitsseitenspiegel zum weiteren Reflektieren des von dem Spiegel reflektierten Lichts aufweist, wobei die optische Abtasteinheit so angeordnet ist, dass der Torsionsstab parallel zur Grundplatte angeordnet ist, wobei der Lichtstrahl entlang einer Ebene senkrecht zur Grundplatte bei der Drehung des Rotors reflektiert und entlang einer Ebene im Wesentlichen parallel zu der Basisplatte durch den Einheitsseitenspiegel abgetastet wird.

US 5 187 364 A beschreibt eine Abtastvorrichtung mit einem Antriebssystem zum winkeligen Hin- und Herbewegen eines drehbaren Spiegels um eine Achse in einer gewünschten Wellenform in Übereinstimmung mit einem Erregungssignal, das von einem programmierbaren Wellenformgenerator geliefert wird. Ein Positionssensor erfasst die tatsächliche Wellenform der Hin- und Herbewegung des Spiegels, und ein Mikroprozessor bestimmt ein Signal, das den Fehler zwischen der tatsächlichen Wellenform und der gewünschten Wellenform darstellt. Der Mikroprozessor umfasst einen Wellenformoptimierer, der dieses Fehlersignal empfängt und ein Anregungskorrektursignal an den Wellenformgenerator liefert, um das Anregungssignal von dem Wellenformgenerator so einzustellen, dass der Spiegel eine tatsächliche Wellenform im Wesentlichen in Übereinstimmung mit der gewünschten Wellenform aufweist.

Es ist Aufgabe der vorliegenden Erfindung, eine Vorrichtung sowie ein entsprechendes Verfahren anzugeben, durch welche bzw. welches eine möglichst hohe Qualität des erhaltenen Röntgenbildes auf möglichst einfache und kostengünstige Weise erreicht wird.

Die Aufgabe wird durch die Vorrichtung bzw. das Verfahren gemäß den unabhängigen Ansprüchen gelöst.

Erfindungsgemäß enthält die Vorrichtung eine Lichtquelle zur Erzeugung eines Stimulationslichtstrahls, welcher die Speicherleuchtstoffschicht zur Aussendung von Emissionslicht anregen kann, sowie ein Ablenkelement zum Ablenken des Stimulationslichtstrahls in der Weise, dass der abgelenkte Stimulationslichtstrahl über die Speicherleuchtstoffschicht bewegt wird.

Vorzugsweise ist eine Antriebseinrichtung vorgesehen zum Antrieb des Ablenkelements durch Abgabe von Antriebsenergie an das Ablenkelement in Abhängigkeit von einer Lage, d.h. Position und/oder Richtung, des abgelenkten Stimulationslichtstrahls und/oder in Abhängigkeit von einer Stellung, insbesondere Winkelstellung, des Ablenkelements.

Bei dem entsprechenden erfindungsgemäßen Verfahren wird ein Stimulationslichtstrahl, welcher die Speicherleuchtstoffschicht zur Aussendung von Emissionslicht anregen kann, mit einem Ablenkelement abgelenkt und dabei über die Speicherleuchtstoffschicht bewegt.

Vorzugsweise wird das Ablenkelement angetrieben, indem eine Antriebsenergie in Abhängigkeit von einer Lage, d.h. Position und/oder Richtung, des abgelenkten Stimulationslichtstrahls und/oder in Abhängigkeit von einer bestimmten Stellung, insbesondere Winkelstellung, des Ablenkelements an das Ablenkelement abgegeben wird.

Diese bevorzugte Ausführung der Erfindung basiert auf dem Gedanken, das Ablenkelement nicht kontinuierlich anzutreiben, sondern die Abgabe von Antriebsenergie auf das Ablenkelement davon abhängig zu machen, dass sich der abgelenkte Stimulationslichtstrahl in einer bestimmten Position befindet und/oder eine bestimmte Richtung aufweist und/oder sich das Ablenkelement in einer bestimmten Winkelstellung befindet. Die Abgabe der Antriebsenergie erfolgt hierbei vorzugsweise in Portionen, z.B. nur in bestimmten Zeiträumen.

Hierdurch werden die Ablenkeigenschaften des Ablenkelements in Abhängigkeit von der aktuellen Lage des Stimulationslichtstrahls bzw. der aktuellen Winkelstellung des Ablenkelements gesteuert, so dass etwaige aktuell auftretende Veränderungen im Verhalten des Ablenkelements, z.B. thermisch bedingte Veränderungen im Ablenkverhalten, bei der Steuerung des Antriebselements automatisch berücksichtigt werden.

Der Zeitpunkt des Beginns und vorzugsweise auch der Zeitpunkt des Endes der Abgabe der Antriebsenergie an das Ablenkelement wird in Abhängigkeit von der mittels geeigneter Sensoren erfassten aktuellen Position bzw. Richtung des abgelenkten Stimulationslichtstrahls bestimmt. Alternativ oder zusätzlich wird die aktuelle Stellung des Ablenkelements mittels eines Aufnehmers erfasst. Die Abgabe von Antriebsenergie wird auf diese Weise getriggert, d.h. ausgelöst, wenn sich der Stimulationslichtstrahl in einer bestimmten Position befindet bzw. in eine bestimmte Richtung zeigt, bzw. wenn sich das Ablenkelement in einer bestimmten Lage befindet. Gegenüber einem etwa durch bloße Synchronisation mit einem Systemtakt erfolgenden Antrieb wird hierdurch der besondere Vorteil erzielt, dass der jeweils günstigste Zeitpunkt für den Antrieb des Ablenkelements zur Erzielung eines möglichst konstanten Ablenkverhaltens präzise auf die aktuellen Gegebenheiten während eines Auslesevorgangs der Speicherleuchtstoffschicht abgestimmt werden kann.

Hierdurch wird eine hohe Gleichmäßigkeit im Ablenkverhalten des Ablenkelements erreicht, ohne dass es auf die Verwendung von Ablenkelementen mit hoher mechanischer und optischer Güte ankommt. Somit können auch preisgünstigere Ablenkelemente mit geringerer Güte verwendet werden. Dadurch wird eine hohe Qualität des Röntgenbildes auf gleichzeitig einfache und kostengünstige Weise gewährleistet.

Vorzugsweise weist das Ablenkelement eine das Stimulationslicht reflektierende Fläche auf, welche durch die Antriebseinrichtung in Oszillation um eine, vorzugsweise parallel zu dieser Fläche verlaufende, Achse versetzt werden kann. Ein derart ausgestaltetes Ablenkelement lässt sich besonders einfach ansteuern und ist darüber hinaus besonders preisgünstig und einfach. Die vorteilhaften Wirkungen kommen hierbei besonders zur Geltung.

Insbesondere weist die reflektierende Fläche eine Resonanzfrequenz auf, welche durch die Antriebseinrichtung in der Weise angetrieben wird, dass die reflektierende Fläche in seiner Resonanzfrequenz oszilliert. Hierbei wird eine besonders hohe Auslenkung einerseits und Stabilität des Ablenkverhaltens andererseits erreicht.

Anstelle einer reflektierenden Fläche kann als Ablenkelement auch ein lichtbrechendes Element verwendet werden, das den vom Stimulationslichtstrahl durchstrahlt wird und diesen dabei durch Lichtbrechung abhängig von seiner jeweiligen Winkellage in unterschiedliche Richtungen ablenkt bzw. versetzt. Ein solches Element könnte z.B. ein Quader aus Glas oder Kunststoff sein, der vom Stimulationslichtstrahl durchstrahlt wird.

Die reflektierende Fläche bzw. das lichtbrechende Element ist elastisch gelagert, z.B. durch Schrauben- und/oder Torsionsfedern. Bei einer Auslenkung aus seiner Ruhestellung wird eine Rückstellkraft erzeugt, welche die Fläche bzw. das Element in Schwingung versetzt. Durch die Elastizitätseigenschaften der elastischen Lagerung in Verbindung mit der Masse der Fläche bzw. des Elements ergibt sich eine Eigenfrequenz des Systems, welcher der Resonanzfrequenz entspricht.

Ein besonderer Vorteil liegt darin, dass das Ablenkelement angetrieben werden kann, während dieses in seiner Resonanzfrequenz schwingt, ohne dass die Resonanzfrequenz selbst bestimmt werden muss. Darüber hinaus reagiert der Antrieb flexibel auf etwaige, z.B. thermisch bedingte, Abweichungen von der Resonanzfrequenz, da das Antriebselement nicht zu festen Zeiten angetrieben wird, sondern beim Antrieb stets die aktuelle Lage des Strahls bzw. Stellung des Ablenkelements berücksichtigt wird. Dadurch wird die Oszillation des Ablenkelements in der Resonanzfrequenz auch bei Schwankungen in der Oszillation auf zuverlässige und einfache Weise aufrechterhalten.

Bei einer bevorzugten Ausgestaltung der Erfindung ist die Antriebseinrichtung in der Weise ausgestaltet, dass die Abgabe von Antriebsenergie an das Ablenkelement, insbesondere nach einer vorgegebenen Zeitverzögerung, ausgelöst wird, wenn sich der Stimulationslichtstrahl in der bestimmten Position und/oder Richtung befindet. Zur Erfassung der bestimmten Position und/oder Richtung des abgelenkte Stimulationslichtstrahls ist vorzugsweise mindestens ein Sensorelement vorgesehen. Hierdurch kann die Abgabe von Antriebsenergie besonders präzise auf die jeweils aktuell gegebenen Verhältnisse, insbesondere der vorzugsweise sensorisch erfassten aktuellen Position bzw. Richtung des abgelenkten Stimulationslichtstrahls abgestimmt werden, so dass ein besonders hohes Gleichmaß im Ablenkungs- bzw. Oszillationsverhalten des Ablenkelements erreicht wird.

Bei einer weiteren bevorzugten Ausführung ist ein Detektor zum Erfassen des von der Speicherleuchtstoffschicht ausgesandten Emissionslichts vorgesehen, wobei der Detektor in der Weise ausgestaltet ist oder die Vorrichtung in der Weise gesteuert wird, dass der Detektor das von der Speicherleuchtstoffschicht ausgesandte Emissionslicht erfasst, während sich der abgelenkte Stimulationslichtstrahl in einer ersten Bewegungsrichtung über die Speicherleuchtstoffschicht bzw. während sich das Ablenkelement in einer ersten Richtung bewegt. Vorzugsweise erfasst der Detektor kein Emissionslicht, wenn sich der abgelenkte Stimulationslichtstrahl bzw. das Ablenkelement in entgegengesetzter Bewegungsrichtung bzw. Richtung bewegt. Insbesondere ist hierbei die Lichtquelle ausgeschaltet, so dass sich sozusagen nur ein gedachter Stimulationslichtstrahl in entgegengesetzter Bewegungsrichtung über die Speicherleuchtstoffschicht bewegt.

Vorzugsweise ist die Antriebseinrichtung in der Weise ausgestaltet, dass die Abgabe von Antriebsenergie an das Ablenkelement ausgelöst wird, wenn sich der abgelenkte Stimulationslichtstrahl in einer der ersten Bewegungsrichtung entgegengesetzten zweiten Bewegungsrichtung über die Speicherleuchtstoffschicht bewegt bzw. wenn sich das Ablenkelement in einer der ersten Richtung entgegengesetzten zweiten Richtung bewegt. Das heißt, dass die Abgabe von Antriebsenergie ausgelöst wird, wenn der abgelenkte Stimulationslichtstrahl während der Bewegung in der zweiten Bewegungsrichtung mindestens eines der beiden Sensorelemente überstreicht und sich dementsprechend in einer bestimmten Position und/oder Richtung befindet. Entsprechendes gilt für die Lage bzw. Bewegung des Ablenkelements. Auf diese Weise erfolgt ein Antrieb des Ablenkelements während des Rücklaufs des abgelenkten Stimulationslichtstrahls, auch Retrace genannt. Hierdurch wird der Vorteil erzielt, dass die durch einen Antriebspuls ggf. vorübergehend auftretenden Unregelmäßigkeiten in der Oszillation des Ablenkelements bereits wieder abgeklungen sind, wenn sich der abgelenkte Stimulationslichtstrahl bei der nachfolgenden Bewegung in der ersten Bewegungsrichtung über die Speicherleuchtstoffschicht bewegt. Hierdurch wird auf einfache Weise eine besonders hohe Gleichmäßigkeit im Ablenk- bzw. Oszillationsverhalten erzielt.

Es ist besonders bevorzugt, die Antriebseinrichtung in der Weise auszugestalten, dass keine Abgabe von Antriebsenergie an das Ablenkelement erfolgt, wenn sich der Stimulationslichtstrahl in der ersten Bewegungsrichtung über die Speicherleuchtstoffschicht bewegt. Neben dem obenstehend geschilderten Vorteil wird hierbei die positive Wirkung erzielt, dass etwaige elektromagnetische Störungen aufgrund eines Antriebspulses das nachfolgende Erfassen des Emissionslichts nicht störend beeinflussen können. Dadurch wird eine besonders hohe Qualität des ausgelesenen Röntgenbildes erhalten.

Aufgrund der nicht unmittelbar vorher angeregten, freien Bewegung, insbesondere Oszillation, des Ablenkelements während der Bewegung in der ersten Bewegungsrichtung des abgelenkten Stimulationslichtstrahls kann das Scannen der Speicherleuchtstoffschicht auch als ballistisches Scannen bezeichnet werden.

Bei einer weiteren bevorzugten Ausgestaltung weist das Ablenkelement ein magnetisches, insbesondere ferromagnetisches und/oder permanentmagnetisches, Element auf. Die Antriebseinrichtung weist eine elektromagnetische Einheit, insbesondere einen Elektromagneten, auf, welche mit dem magnetischen Element wechselwirken und dabei Antriebsenergie an das Ablenkelement abgeben kann. Hierdurch wird auf einfache Weise eine präzise steuerbare Abgabe von Antriebsenergie realisiert.

Es ist außerdem bevorzugt, dass die Antriebseinrichtung zur Abgabe der Antriebsenergie in Form von Pulsen ausgebildet ist. Die Dauer und/oder Höhe der Pulse sind durch eine Pulsweiten- bzw. Pulshöhenmodulation hierbei vorzugsweise so gewählt, dass die Amplitude der Auslenkung des oszillierenden Ablenkelements konstant ist. Insbesondere weisen die Pulse eine Pulsdauer auf, welche kürzer ist als die halbe Periodendauer, mit welcher das Ablenkelement, insbesondere die reflektierende Fläche, oszilliert. Hierdurch wird erreicht, dass der Zeitraum der Abgabe von Antriebsenergie auf einen Zyklus der Oszillationsbewegung des Ablenkelements begrenzt werden kann, in welchem sich dieses in eine Richtung bewegt. Wird die Pulsdauer bei der Abgabe der Antriebsenergie ausreichend klein gewählt, so ist auch für den Fall, dass das Ablenkelement vorübergehend höherfrequentere Oszillationen mit kürzeren Periodendauern ausführt, ein zuverlässiger Antrieb des Ablenkelements gewährleistet.

In einer weiteren bevorzugten Ausgestaltung weist die Vorrichtung eine Transporteinrichtung auf, durch welche die Speicherleuchtstoffschicht in eine gekrümmte Form gebracht werden kann. Die Krümmung der Speicherleuchtstoffschicht erfolgt hierbei vorzugsweise zylindrisch-konkav, so dass der durch das Ablenkelement abgelenkte Stimulationslichtstrahl bei seinem Weg über die Speicherleuchtstoffschicht stets senkrecht auf die Speicherleuchtstoffschicht auftrifft. Dadurch kann die beim Auslesen ebener Speicherleuchtstoffschichten üblicherweise erforderliche Postscan-Optik bzw. rechnerische Eliminierung von Verzerrungen im ausgelesenen Röntgenbild entfallen. Der Aufbau der Vorrichtung bzw. das Verfahren wird dadurch noch einfacher, ohne dass die Bildqualität negativ beeinträchtigt wird.

Erfindungsgemäß ist die Vorrichtung bzw. das Verfahren dadurch gekennzeichnet, dass mindestens ein Masseelement vorgesehen ist, durch welches das Ablenkverhalten des Ablenkelements beeinflussbar ist bzw. beeinflusst wird.

Die Erfindung basiert auf dem Gedanken, zusätzlich zum eigentlichen Ablenkelement, nämlich einem Spiegel, ein Masseelement vorzusehen, durch dessen zusätzliche Masse das oszillatorische oder rotatorische Bewegungsverhalten des Ablenkelements gegenüber einem Ablenkelement ohne Massenelement verändert wird und dadurch hinsichtlich unterschiedlicher Anforderungen gezielt optimiert werden kann.

Dadurch kann insbesondere die Empfindlichkeit des Ablenkelements gegen Stöße erheblich reduziert werden, indem die Anregung unerwünschter Eigenschwingungen um eine Achse senkrecht zur Dreh- bzw. Oszillationsachse und/oder zusätzlicher Drehimpulse um die Dreh- bzw. Oszillationsachse des Ablenkelements durch geeignete Anordnung der Masseelemente effizient verhindert werden kann. Darüber hinaus greifen Kräfte aufgrund von Luftverwirbelungen durch die Schwingbewegung ebenfalls symmetrisch an dem System an und regen damit die erwähnten Schwingungsmoden nicht an. Die Qualität des aus der Speicherleuchtstoffplatte ausgelesenen Röntgenbildes wird dadurch deutlich verbessert.

Erfindungsgemäß wird bei einem oszillierenden Ablenkelement das Masseelement so angeordnet, dass der Schwerpunkt der durch Ablenk- und Masseelement gebildeten Gesamtmasse auf der Oszillationsachse zu liegen kommt. Dies wird am einfachsten durch ein Masseelement erreicht, welches in Form und Masse mit dem Ablenkelement im Wesentlichen identisch ist. Damit werden unerwünschte Eigenschwingungen bzw. zusätzliche Drehimpulse auf einfache und kostengünstige Weise vermieden.

Erfindungsgemäß ist mindestens ein elastisches Element vorgesehen, an welchem das Ablenkelement befestigt ist. Bei dem elastischen Element handelt es sich vorzugsweise um eine Torsionsfeder, z.B. in Form eines Federstahlstreifens, oder einer Spiral- oder Schraubenfeder. Das Ablenkelement ist so ausgestaltet, dass dieses den Stimulationslichtstrahl durch Reflexion und/oder Lichtbrechung ablenken kann. Das Ablenkelement ist als Spiegel ausgebildet, welcher einen flachen Spiegelkörper mit einer das Stimulationslicht reflektierenden Oberfläche aufweist.

Das Massenelement ist am Ablenkelement und/oder am elastischen Element angebracht. Vorzugsweise ist das Ablenkelement am elastischen Element, insbesondere einer Torsionsfeder, angeklebt. Hierzu kann an der Torsionsfeder eine vordefinierte Fläche vorgesehen sein. Das Ablenkelement ist auf einer ersten Seite der Torsionsfeder und das Masseelement ist auf einer der ersten Seite gegenüber liegenden zweiten Seite der Torsionsfeder angebracht. Auch diese Maßnahmen tragen einzeln oder in Kombination dazu bei, dass unerwünschte Eigenschwingungen bzw. zusätzliche Drehimpulse auf besonders einfache und kostengünstige Weise effizient verhindert werden.

Erfindungsgemäß haben der Spiegel und das Masseelement, das einen Gegenkörper zum Spiegel darstellt, jeweils eine rechteckige oder runde Form und weisen eine im Wesentlichen plane Vorder- und Rückseite auf.

Es ist bevorzugt, das Ablenkelement und/oder das Masseelement aerodynamisch auszugestalten, indem z.B. deren Kanten abgeschrägt werden und/oder ein zwischen dem Ablenkelement und dem Masseelement ggf. gebildeter Spalt zumindest im Randbereich geschlossen wird. Dadurch kann eine Dissipation von Energie, d.h. ein Energieverlust, des oszillierenden Systems verringert und ein möglicher Einfluss von Luftverwirbelungen auf die Oszillation weiter reduziert werden.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung eines Beispiels einer Vorrichtung zum Auslesen von Speicherleuchtstoffschichten;
- Fig. 2: ein erstes Beispiel für eine Verwendung des Ablenkelements in Seitenansicht;
- Fig. 3: ein erstes Beispiel für ein Ablenkelement in Draufsicht;
- Fig. 4: ein zweites Beispiel für ein Ablenkelement in Draufsicht;
- Fig. 5: ein Beispiel für einen zeitlichen Ablauf der Steuerung der Vorrichtung;
- Fig. 6: ein Beispiel zur Erläuterung eines bevorzugten Aspekts der Steuerung der Vorrichtung;
- Fig. 7: ein zweites Beispiel für eine Verwendung des Ablenkelements in Seitenansicht; und
- Fig. 8: ein Ablenkelement in einer perspektivischen Darstellung.

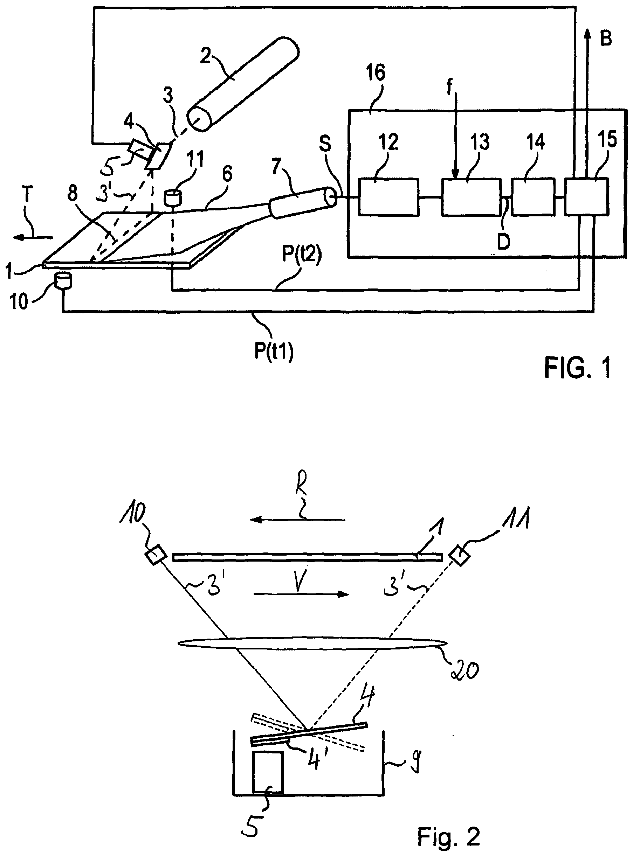

Figur 1 zeigt eine Vorrichtung zum Auslesen einer Speicherleuchtstoffschicht 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffschicht 1 bewegt. Das Ablenkelement 4 weist eine reflektierende Fläche, insbesondere in Form eines Spiegels, auf, welche durch eine Antriebseinrichtung 5 in Oszillation versetzt wird.

Während der Bewegung des abgelenkten Stimulationslichtstrahls 3' über die Speicherleuchtstoffschicht 1 sendet diese in Abhängigkeit der darin gespeicherten Röntgeninformation Emissionslicht aus, welches von einer optischen Sammeleinrichtung 6, beispielsweise einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Soll die ausgelesene Zeile 8 beispielsweise aus 1000 Bildpunkten zusammengesetzt sein, so werden aus dem beim Auslesen der Zeile 8 erhaltenen Detektorsignal S 1000 entsprechende Bildsignalwerte B abgeleitet.

Durch einen Transport der Speicherleuchtstoffschicht 1 in Transportrichtung T mittels einer Transporteinrichtung (nicht dargestellt) wird ein sukzessives Auslesen einzelner Zeilen 8 der Speicherleuchtstoffschicht 1 erreicht und damit ein zweidimensionales, aus einzelnen Bildpunkten mit jeweils einem zugehörigen Bildsignalwert B zusammengesetztes Röntgenbild erhalten. Beträgt die Anzahl der in Transportrichtung T ausgelesenen Zeilen 8 beispielsweise 1500, so werden mit jeweils 1000 Bildpunkten pro Zeile 8 für das ausgelesene Röntgenbild insgesamt 1500 mal 1000 Bildpunkte mit jeweils einem zugehörigen Bildsignalwert B erhalten.

Grundsätzlich ist es auch möglich, die Speicherleuchtstoffschicht 1 ortsfest zu lagern und die restlichen Komponenten, insbesondere Laser 2, Ablenkelement 4, Sammeleinrichtung 6 und Detektor 7, relativ zur Speicherleuchtstoffschicht 1 zu bewegen.

Das Detektorsignal S wird zunächst durch ein Tiefpassfilter 12 gefiltert, wobei höherfrequente Anteile des Detektorsignals S, insbesondere Rauschanteile, eliminiert werden. Das gefilterte Detektorsignal S wird dann einem Analog-Digital-Wandler 13 zugeführt und dort mit einer Abtastfrequenz f abgetastet, wobei bei jedem Abtastvorgang ein Detektorsignal D in jeweils digitalen Einheiten erhalten wird. Das Abtasten des Detektorsignals S im Analog-Digital-Wandler 13 erfolgt vorzugsweise nach dem sogenannten Sample-and-Hold-Prinzip, wonach beim Abtasten die jeweils aktuelle analoge Signalhöhe des zu einem Abtastzeitpunkt am Analog-Digital-Wandler 13 anliegenden Detektorsignals S gehalten und in einem entsprechenden digitalen Detektorsignalwert D umgewandelt wird. Nach einer Zwischenspeicherung im Speicher 14 werden in einer Steuerungseinheit 15 aus den Detektorsignalwerten D die Bildsignalwerte B berechnet.

Die gezeigte Vorrichtung weist ferner zwei Sensoren 10 und 11 auf, die zu beiden Seiten der Speicherleuchtstoffschicht 1 in der Weise angeordnet sind, dass auf diese der abgelenkte Stimulationslichtstrahl 3' auftreffen kann, bevor bzw. nachdem dieser die Speicherleuchtstoffschicht 1 entlang der Zeile 8 überstreicht bzw. überstrichen hat. Wird der Stimulationslichtstrahl 3 mit dem Ablenkelement 4 in Richtung der Zeile 8 abgelenkt, so passiert dieser vor dem eigentlichen Abtasten der Zeile 8 zunächst den ersten Sensor 10 und danach den zweiten Sensor 11. Das Licht des abgelenkten Stimulationslichtstrahls 3' wird dabei von den beiden lichtempfindlichen Sensoren 10 und 11 erfasst und in entsprechende elektrische Signale P(t1) und P(t2) zu den Zeitpunkten t1 bzw. t2 umgewandelt und an die Steuerungseinheit 15 der Verarbeitungseinrichtung 16 weitergeleitet.

Die Steuerungseinheit 15 ist mit der Antriebseinrichtung 5 zum Antrieb des Ablenkelements 4 verbunden und steuert dieses in der Weise, dass das Ablenkelement 4 durch Abgabe von Abtriebsenergie von der Antriebseinrichtung 5 nur dann aktiv angetrieben wird, wenn oder nachdem der abgelenkte Stimulationslichtstrahl 3' eine bestimmte Richtung und/oder Position eingenommen hat. Im gezeigten Beispiel überstreicht der abgelenkte Stimulationslichtstrahl 3' zumindest einen der beiden Sensoren 10 und 11, woraufhin dieser einen elektrischen Puls P an die Steuerungseinheit 15 sendet, welcher - ggf. nach einer vorgebbaren Zeitverzögerung - die Antriebseinrichtung 5 in der Weise steuert, dass diese zeitweise Antriebsenergie, insbesondere in Form eines Antriebsenergiepulses, an das oszillierende Ablenkelement 4 abgibt und dabei dessen Oszillation, vorzugsweise im Bereich einer Resonanzfrequenz des Ablenkelements 4, aufrechterhält. Dies wird im Folgenden näher erläutert.

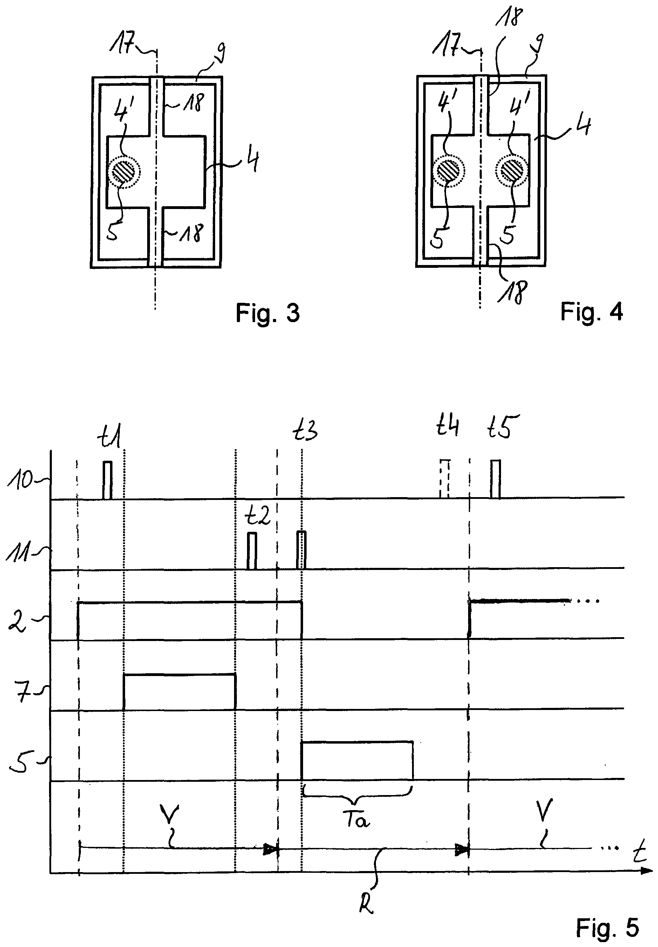

Figur 2 zeigt ein erstes Beispiel für eine Verwendung eines Ablenkelements 4 in einer Seitenansicht. Das entsprechende Ablenkelement in Draufsicht zeigt Figur 3.

Das Ablenkelement 4 weist eine reflektierende Fläche auf, welche über streifenförmige Verlängerungen 18 an einem Gehäuse 9 angebracht ist. Die streifenförmigen Verlängerungen 18 sind vorzugsweise einstückig mit der reflektierenden Fläche des Ablenkelements 4 ausgebildet, können aber auch separat von dieser hergestellt und anschließend mit dieser verbunden werden. Die streifenförmigen Verlängerungen 18 stellen eine Torsionsfeder dar, durch welche bei einer Auslenkung des Ablenkelements 4 um eine entlang der Verlängerungen 18 verlaufende Achse 17 eine Rückstellkraft erzeugt wird, die das Ablenkelement 4 in die entgegengesetzte Richtung auslenkt usw.. Auf diese Weise wird das Ablenkelement 4 zu einer Oszillation um die Achse 17 angeregt.

Die Auslenkung des Ablenkelements 4 erfolgt vorzugsweise durch einen Elektromagneten 5, welcher durch Anlegen einer elektrischen Spannung und den damit einhergehenden Stromfluss ein magnetisches Feld erzeugt, das auf ein am Ablenkelement 4 befindliches magnetisches Element 4' wirkt. Je nach Material des magnetischen Elements 4' kann dieses durch den Elektromagneten 5 sowohl angezogen als auch abgestoßen werden oder nur angezogen werden. Ersteres ist der Fall, wenn das magnetische Element permanentmagnetische Substanzen aufweist. Letzteres ist der Fall bei Verwendung eines ferromagnetischen Materials, dessen Magnetisierung nicht permanent erhalten bleibt.

Um das Ablenkelement 4 von seiner Ruheposition zunächst in einen oszillierenden Zustand zu bringen, werden an den Elektromagneten 5 fortlaufend Spannungspulse einer bestimmten Dauer und Frequenz angelegt, wodurch schließlich die Amplitude der Oszillation des Ablenkelements 4 so groß wird, dass der abgelenkte Stimulationslichtstrahl 3' über die Breite der abzutastenden Speicherleuchtstoffschicht 1 hinaus läuft und dabei insbesondere auch auf den ersten bzw. zweiten Sensor 10 bzw. 11 trifft.

Zwischen dem Ablenkelement 4 und der Speicherleuchtstoffschicht 1 ist im gezeigten Beispiel eine optische Einrichtung 20, eine sog. Postscan-Optik, vorgesehen, durch welche der abgelenkte Stimulationslichtstrahl 3' einerseits auf die Speicherleuchtstoffschicht 1 fokussiert wird und andererseits dessen Radialbewegung in eine Linearbewegung entlang der Zeile 8 auf der Speicherleuchtstoffschicht 1 umgewandelt wird.

Alternativ oder zusätzlich zu einer Postscan-Optik kann auch ein sog. Variofokus verwendet werden, welcher zwischen dem Laser 2 und dem Ablenkelement 4 angeordnet ist (sog. Prescan-Optik) und den Laserstrahl 3 so formt, dass nach seiner Ablenkung durch das Ablenkelement 4 ebenfalls eine Linearbewegung entlang der Linie 8 auf der Speicherleuchtstoffschicht 1 erhalten wird. Eine Postscan-Optik kann dann entfallen.

Grundsätzlich ist es aber auch ohne Weiteres möglich, auf die optische Einrichtung 20 vollständig zu verzichten und die dann auftretenden Verzerrungen aus dem erhaltenen Röntgenbild herauszurechnen, beispielsweise anhand von vor dem Auslesen ermittelten Informationen zum Verhalten des Stimulationslichtstrahls

Figur 4 zeigt eine Draufsicht auf ein zweites Beispiel eines Ablenkelements 4, welches im Unterschied zu dem in Figur 3 gezeigten Beispiel nicht nur mittels eines Elektromagneten 5, sondern mittels zwei Elektromagneten 5 und den entsprechenden magnetischen Elementen 4' an der Unterseite des Ablenkelements 4 zu Oszillationen um die Achse 17 angeregt werden kann. Bei dieser Variante werden die beiden Elektromagneten 5 vorzugsweise so angesteuert, dass ein Elektromagnet 5 das entsprechende magnetische Element 4' auf einer Seite des Ablenkelements 4 abstößt und der andere Elektromagnet 5 das entsprechende magnetische Element 4' auf der anderen Seite des Ablenkelements 4 anzieht. Auf diese Weise wird die Abgabe eines besonders hohen Maßes an Antriebsenergie zum gewünschten Zeitpunkt ermöglicht. Im Übrigen gelten für dieses Beispiel die Ausführungen im Zusammenhang mit den Figuren 2 und 3 entsprechend.

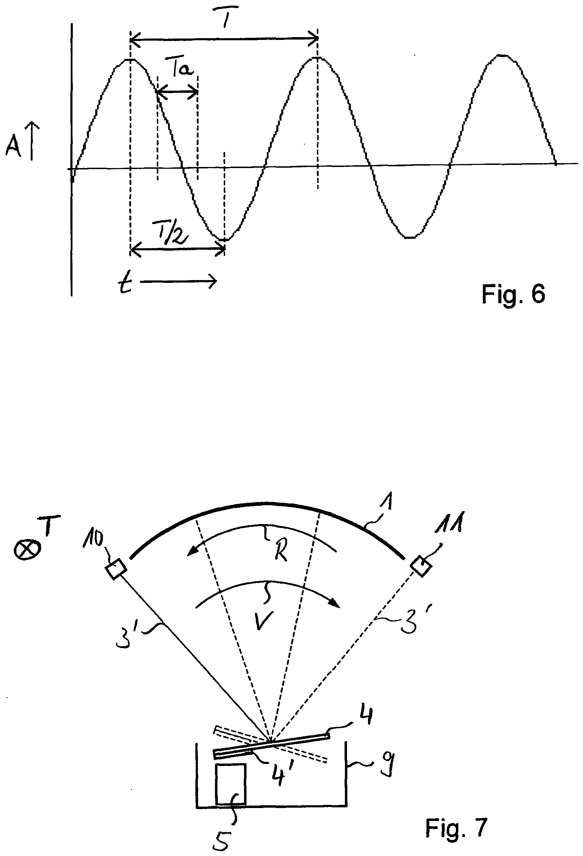

Nachfolgend wird anhand der Figuren 5 und 6 der zeitliche Ablauf der Steuerung der Vorrichtung einschließlich des Ablenkelements 4 näher erläutert, wobei Bezug auf die Figuren 1 und 2 genommen wird.

In der gewählten Darstellung der Figur 5 ist der zeitliche Verlauf von Signalen bzw. Zuständen der einzelnen Komponenten der Vorrichtung (siehe Fig. 1) dargestellt, und zwar des ersten Sensors 10, des zweiten Sensors 11, des Lasers 2, des Detektors 7 sowie des Elektromagneten 5 am Ablenkelement 4. Der dargestellte Verlauf des jeweiligen Zustands des Lasers 2, des Detektors 7 bzw. des Elektromagneten 5 ist hierbei so zu interpretieren, dass der Laser 2, Detektor 7 bzw. Elektromagnet 5 aktiv ist und Stimulationslicht erzeugt, Emissionslicht erfasst bzw. Antriebsenergie abgibt, wenn ein von der Nulllinie verschiedener Verlauf gezeigt wird.

Wenn der Stimulationslichtstrahl 3 durch das oszillierende Ablenkelement 4 abgelenkt wird, überstreicht der sich in Richtung V (sog. Trace-Phase) bewegende, abgelenkte Stimulationslichtstrahl 3' zunächst zum Zeitpunkt t1 den Sensor 10, worauf dieser ein entsprechendes Sensorsignal P(t1) an die Steuerungseinheit 15 sendet. Dieses Sensorsignal wird auch als Begin of Line-Signal (BOL) bezeichnet.

Nach einer vorgebbaren Zeitspanne, nach welcher der abgelenkte Stimulationslichtstrahl 3' die Speicherleuchtstoffschicht 1 erreicht hat, erfolgt die Detektion des durch den abgelenkten Stimulationslichtstrahl 3' angeregten Emissionslichts durch den Detektor 7. Nach Durchlaufen der Zeile 8 der Speicherleuchtstoffschicht 1 verlässt der Stimulationslichtstrahl 3' schließlich die Speicherleuchtstoffschicht 1 und überstreicht zum Zeitpunkt t2 den zweiten Sensor 11, woraufhin dieser ebenfalls ein entsprechendes Sensorsignal P(t2) erzeugt. Dieses Sensorsignal wird auch als End of Line-Signal (EOL) bezeichnet.

Aufgrund der Oszillationsbewegung des Ablenkelements 4 vollzieht dieses nach seinem maximalen Ausschlag nun eine Rückwärtsbewegung, bei welcher der sich nunmehr in Rückwärtsrichtung R (sog. Retrace-Phase) bewegende, abgelenkte Stimulationslichtstrahl 3' erneut zu einem Zeitpunkt t3 den zweiten Sensor 11 überstreicht, woraufhin dieser wiederum ein entsprechendes Sensorsignal an die Steuerungseinheit 15 sendet. Diese schaltet sodann den Laser 2 ab und veranlasst den Elektromagneten 5 zur Erzeugung eines magnetischen Feldes, wodurch an das oszillierende Ablenkelement 4 Antriebsenergie übertragen wird.

Die Übertragung der Antriebsenergie erfolgt hierbei nur während einer bestimmten Zeitdauer Ta und vorzugsweise während des Rücklaufs des Ablenkelements 4 bzw. während des gedachten Rücklaufs des abgelenkten (abgeschalteten) Stimulationslichtstrahls 3' in Richtung R. Die Zeitdauer Ta der Anregung des Ablenkelements 4 ist hierbei vorzugsweise kürzer als die Hälfte der Periodendauer T einer vollständigen Oszillationsbewegung, d.h. einer ganzen Hin- und Herbewegung, des Ablenkelements 4.

Dies ist in Figur 6 veranschaulicht, welche den Verlauf der Amplitude A des oszillierenden Ablenkelements, d.h. dessen Auslenkung, über die Zeit t zeigt. T bezeichnet die Periodendauer einer vollständigen Oszillation des Ablenkelements 4. Die bevorzugte Zeitdauer Ta der Abgabe von Antriebsenergie an das Ablenkelement 4 ist, wie in Figur 6 ersichtlich, kürzer als die halbe Periodendauer T/2 der Oszillation und beginnt vorzugsweise erst zu einem Zeitpunkt zu laufen, wenn die maximale Auslenkung des Ablenkelements 4 bereits überschritten ist. Der Zeitpunkt dieser maximalen Auslenkung liegt genau in der Mitte zwischen den beiden in Figur 5 eingezeichneten Zeitpunkten t2 und t3.

Durch die beschriebene Wahl der Zeitdauer Ta und des Zeitraums, d.h. der zeitlichen Lage der Zeitdauer Ta, für die Anregung des Ablenkelements 4 wird erreicht, dass an das Ablenkelement 4 stets nur während der Bewegung in einer Bewegungsrichtung Antriebsenergie zugeführt werden kann, und zwar auch dann, wenn sich die Frequenz der Oszillation des Ablenkelements 4 vorübergehend etwas ändert, insbesondere etwas größer wird, was eine vorübergehende Verkürzung der aktuellen Periodendauer T zur Folge hat.

Auf seinem gedachten Weg in der Retrace-Phase in Richtung R über die Speicherleuchtstoffschicht 1 verlässt der (abgeschaltete) Stimulationslichtstrahl 3' die Speicherleuchtstoffschicht 1 und erreicht zum Zeitpunkt t4 den ersten Sensor 11, dessen gedachtes Sensorsignal zum Zeitpunkt t4 in Fig. 6 eingezeichnet ist. Nach einer Richtungsumkehr des schwingenden Ablenkelements 4 wird der Laser 2 wieder eingeschaltet und der abgelenkte Stimulationslichtstrahl 3' überstreicht zu einem Zeitpunkt t5 wieder den ersten Sensor 10, welcher ein entsprechendes Begin of Line-Signal (BOL) erzeugt. Der oben beschriebene Ablauf beginnt nun von Neuen, wobei eine nächste Zeile 8 der Speicherleuchtstoffschicht 1 ausgelesen wird.

Wie bereits erwähnt, ist es alternativ oder zusätzlich zur Erfassung der Lage, d.h. Position bzw. Richtung, des abgelenkten Stimulationslichtstrahls 3' mittels der Sensoren auch möglich, einen Aufnehmer, vorzugsweise in Form einer Spule, vorzusehen, welcher die aktuelle Stellung des Ablenkelements 4 erfassen kann. Der Aufnehmer liefert ein entsprechendes Aufnehmersignal, wenn das oszillierende Ablenkelement 4 seine Stellung ändert. Beispielsweise kann einer der beiden Elektromagneten 5 in dem in Fig. 4 gezeigten Beispiel zur Abgabe von Antriebsenergie ausgebildet sein, während der zweite Elektromagnet 5 die Funktion des Aufnehmers übernimmt, wobei das entsprechende magnetische Element 4' dieses Elektromagneten 5 permanentmagnetisch ausgebildet ist. Eine Relativbewegung zwischen dem Element 4' und der Spule des Elektromagneten 5 während der Oszillation des Ablenkelements 4 induziert dann in der Spule eine Spannung, die als Aufnehmersignal ausgewertet werden kann, wobei insbesondere z.B. das Durchlaufen eines Umkehrpunktes erfasst werden kann. In Abhängigkeit von dem entsprechenden Aufnehmersignal kann dann die Abgabe von Antriebsenergie an das Ablenkelement gesteuert, insbesondere getriggert, werden.

Prinzipiell kann die Abgabe von Antriebsenergie auch in der Trace-Phase erfolgen. Grundsätzlich kann eine Abgabe der Antriebsenergie an das Ablenkelement 4 sowohl in der Trace- als auch in der Retrace-Phase erfolgen. Hierbei ist dann zwar kein sog. ballistisches Scannen während der Detektion des Emissionslichts mehr gegeben, und es kann auch ein Übersprechen des Antriebspulses auf die Elektronik bei der Datenaufnahme nicht ausgeschlossen werden. Dennoch wird hierbei der Vorteil erzielt, dass aufgrund der jeweils geringeren Antriebsenergiemengen pro Zeiteinheit jeweils kürzere Antriebspulse gewählt werden können, was einen zuverlässigen Antrieb des Ablenkelements auch bei höherfrequenteren Oszillationen gewährleistet, wie bereits oben erläutert wurde.

Die Form der Antriebspulse bei der Abgabe der Antriebsenergie kann die Form eines Rechtecks aufweisen, wie in Fig. 5 mit Bezug auf den Elektromagneten 5 dargestellt. Alternativ kann die Form der Antriebspulse aber auch eine von der Rechteckform abweichende, insbesondere eine beliebige, Form aufweisen. Auf diese Weise kann z.B. das Auftreten elektromagnetischer Störsignale stark vermindert oder sogar verhindert werden, was die elektromagnetische Verträglichkeit (EMV) der Vorrichtung deutlich verbessert.

Der Antriebspuls kann auch eine Pulsdauer Ta aufweisen, die länger ist als eine halbe Periode T/2 der Oszillation. Ein damit verbundener "Bremseffekt" auf das Ablenkelement 4 kann unter bestimmten Voraussetzungen erwünscht und entsprechend von Vorteil sein.

Darüber hinaus kann die Polarität des Antriebspulses wechseln, wobei der Polaritätswechsel vorzugsweise, aber nicht notwendigerweise, an einem Umkehrpunkt der Oszillation ausgeführt wird. Auch hierdurch kann ein effektives Antreiben der Schwingung realisiert werden.

Grundsätzlich ist es möglich, nicht in jeder Oszillationsperiode des Ablenkelements 4 Antriebsenergie an das Ablenkelement 4 abzugeben, sondern nur in jeder zweiten, dritten oder höheren Periode. Es kann die Abgabe der Antriebsenergie auch erst bei Bedarf erfolgen, wenn z.B. die Amplitude der Auslenkung des Ablenkelements 4, welche mit dem Aufnehmer zuverlässig erfasst werden kann, einen bestimmten Wert unterschritten hat. Alternativ oder zusätzlich kann eine Abgabe von Antriebsenergie an das Ablenkelement z.B. erst erfolgen, sobald kein EOL- und/oder BOL-Signal mehr von den Sensoren 10 bzw. 11 erzeugt wird.

Die oben beschriebene Steuerung der Antriebseinrichtung 5 muss nicht notwendigerweise in Abhängigkeit von den erfassten sog. BOL- bzw. EOL-Signalen erfolgen. Anstelle von im Wesentlichen in der Ebene bzw. im Krümmungsverlauf der Speicherleuchtstoffschicht 1 (siehe Figuren 2 und 7) angeordneten BOL-bzw. EOL-Sensoren 10 bzw. 11 können auch eigene Photodioden oder andere positions- und zeitsensitive Sensoren vorgesehen sein, die nicht notwendigerweise in der Ebene bzw. im Krümmungsverlauf der Speicherleuchtstoffschicht 1 liegen müssen.

Insbesondere für einen mit dem Antrieb verbundenen Hochlaufalgorithmus zum Anregen der Oszillation des Ablenkelements 4 aus seiner Ruhelage kann ein Sensor (nicht dargestellt) in der Nähe der Ruhelageposition des Ablenkelements 4 von Vorteil sein, der jedoch, vom Ablenkelement 4 aus betrachtet, hinter der Ebene der Speicherleuchtstoffschicht 1 liegt, so das er nur vor dem Einfahren der Speicherleuchtstoffschicht 1 zur Erfassung des abgelenkten Stimulationslichtstrahls 3' dient, während er beim eigentlichen Auslesen bei eingefahrener Speicherleuchtstoffschicht 1 von dieser verdeckt wird.

Figur 7 zeigt ein zweites Beispiel für eine Verwendung des Ablenkelements 4 in einer Seitenansicht. Im Unterschied zu dem in Figur 2 gezeigten Beispiel ist die Speicherleuchtstoffschicht 1 jedoch nicht eben, sondern gekrümmt. Der Verlauf der Krümmung der Speicherleuchtstoffschicht 1 entspricht im Wesentlichen dem Krümmungsverlauf eines Teils einer Zylindermantelfläche, deren Achse parallel zu der senkrecht zur Zeichenebene verlaufenden Transportrichtung T (vgl. Fig. 1) ausgerichtet ist. Vorzugsweise verläuft die Achse des Zylinders der Zylindermantelfläche parallel zur Oszillationsachse 17 (vgl. Fig. 3 und 4), insbesondere nahe oder auf der Oszillationsachse 17, des Ablenkelements 4. Eine solche Krümmung hat gegenüber dem Auslesen einer ebenen Speicherleuchtstoffschicht 1 (siehe Figur 2) den Vorteil, dass auf spezielle optische Einrichtungen (vgl. Postscan-Optik 20 in Fig. 2) zwischen dem Ablenkelement 4 und der Speicherleuchtstoffschicht 1 verzichtet werden kann, was den Aufbau der Vorrichtung vereinfacht. Gleichzeitig wird auf diese Weise gewährleistet, dass der abgelenkte Stimulationslichtstrahl 3' stets im Wesentlichen senkrecht auf den jeweiligen Abschnitt der Speicherleuchtstoffschicht 1 auftrifft, was zu einer besonders hohen Lichtausbeute bei der Anregung des Emissionslichts bei gleichzeitiger Vermeidung von negativen Effekten auf die Bildqualität aufgrund von Stimulationslichtstreuung in der Speicherleuchtstoffschicht 1 führt. Im Übrigen gelten die Ausführungen zu Figur 2 entsprechend.

Als Erfindung wird eine Vorrichtung (vgl. Figur 1) zum Auslesen von in einer Speicherleuchtstoffschicht 1 gespeicherten Röntgeninformationen angesehen mit einer Lichtquelle 2 zur Erzeugung eines Stimulationslichtstrahls 3, welcher die Speicherleuchtstoffschicht 1 zur Aussendung von Emissionslicht anregen kann, und einem Ablenkelement 4 zum Ablenken des Stimulationslichtstrahls 3 in der Weise, dass der abgelenkte Stimulationslichtstrahl 3' über die Speicherleuchtstoffschicht 1 bewegt wird, wobei die Vorrichtung alternativ oder zusätzlich zur Antriebseinrichtung 5 durch mindestens ein Masseelement gekennzeichnet ist, durch welches das Bewegungs- und/oder Ablenkverhalten des Ablenkelements 4 beeinflussbar ist. Als Erfindung wird auch ein entsprechendes Verfahren angesehen. Dies wird im Folgenden näher erläutert.

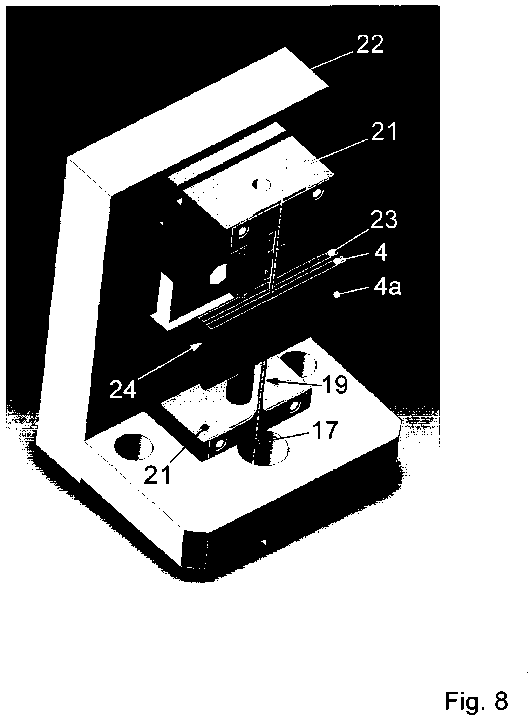

Figur 8 zeigt ein entsprechendes Ablenkelement 4 in einer perspektivischen Darstellung. Das Ablenkelement 4 ist im vorliegenden Beispiel als Spiegel ausgebildet, welcher einen im Wesentlichen flachen quaderförmigen Spiegelkörper umfasst, der an der vorderen Flachseite 4a eine Spiegelfläche aufweist, an welcher der Stimulationslichtstrahl 3 (vgl. Figur 1) zumindest teilweise reflektiert werden kann. Das Ablenkelement 4 ist mit seiner hinteren Flachseite an der vorderen Seite einer "H"- oder "Doppel-T"-förmigen Torsionsfeder 19, beispielsweise durch Kleben, befestigt, welche ihrerseits an Halterungen 21 angebracht ist, beispielsweise mittels Schrauben, Nieten und/oder Kleben. Die Halterungen 21 sind an einem Rahmen 22 angebracht, welcher in der Vorrichtung montiert werden kann.

Das Ablenkelement 4 wird durch geeignete Elemente, beispielsweise durch mindestens ein am Ablenkelement 4 befindliches magnetisches Element und mindestens einen Elektromagneten am Rahmen 22, in Schwingung um die Oszillationsachse 17 versetzt, wobei die vorstehenden Ausführungen im Zusammenhang mit den Figuren 2 bis 7 entsprechend gelten.

An der hinteren Seite der Torsionsfeder 19 ist ein Masseelement 23 angebracht, beispielsweise durch Kleben, welches mit dem Ablenkelement 4 in Form und Masse im Wesentlichen übereinstimmt, d.h. ebenfalls einen flachen quaderförmigen Körper aufweist und in etwa dieselbe Masse hat. Alternativ ist es aber auch möglich, dass das Masseelement 23 eine der Form des Ablenkelements 4 im geometrischen Sinne ähnliche Form aufweist, welche beispielsweise durch zentrische Streckung erhalten wird.

Grundsätzlich können das Ablenkelement 4 und das Masseelement 23 aber auch andere Formen haben und beispielsweise als runde, z.B. kreisförmige oder elliptische, flache Scheiben ausgebildet sein. Auch bei dieser Variante ist bevorzugt, dass das Ablenkelement 4 und das Masseelement 23 in Form und Masse im Wesentlichen identisch sind oder zumindest die Formen von Ablenkelement 4 und Masseelement 23 im geometrischen Sinne ähnlich sind.

Vorzugsweise kann die Bauform des Ablenkelements 4 und/oder Masseelements 23 aerodynamisch ausgestaltet sein, indem z.B. deren Kanten abgeschrägt werden und/oder der zwischen dem Ablenkelement 4 und dem Masseelement 23 gebildete Spalt 24 zumindest im Randbereich oder in Teilen des Randbereichs geschlossen wird. Dies erfolgt beispielsweise durch Ein- und/oder Aufbringen eines geeigneten Füllstoffs, der z.B. mit Klebstoff vermischt und daher selbstaushärtend ist, oder mit einer anderen geeigneten Dichtungsmasse, wie z.B. Kitt.

Im Unterschied zum Ablenkelement 4 kann beim Masseelement 23 auf eine Spiegelfläche verzichtet werden. Das Ablenkelement 4 weist eine rechteckige Glasplatte mit einer, insbesondere durch Aufdampfen oder galvanische Abscheidung, auf der Glasplatte aufgebrachten Spiegelfläche auf, während als Masseelement 23 im Wesentlichen die gleiche Glasplatte eingesetzt wird.

Durch das zusätzlich zum Ablenkelement 4 vorgesehene Masseelement 23 in Form identischer Glasplatten wird erreicht, dass der Massenschwerpunkt der durch das Ablenk- und Masseelement 4 und 23 gebildeten Gesamtmasse auf der Oszillationsachse 17 zu liegen kommt, und zwar genau in der Mitte der Höhe des vom Ablenkelement 4 und dem Masseelement 23 abgedeckten Bereichs der Torsionsfeder 19.

Durch die vorstehend genannten Maßnahmen wird das Oszillationsverhalten des Ablenkelements 4 dahingehend verbessert, dass seine Empfindlichkeit gegen Stöße von außen erheblich reduziert wird, indem die Anregung unerwünschter Eigenschwingungen und/oder zusätzlicher Drehimpulse des Ablenkelements 4 um deren Oszillationsachse 17 effizient verhindert wird. Darüber hinaus greifen Kräfte aufgrund von Luftverwirbelungen durch die Schwingbewegung ebenfalls symmetrisch an dem System Ablenkelement/Masseelement 4/23 an, so dass die Anregung der erwähnten unerwünschten Schwindungsmoden unterbleibt. Die Qualität des ausgelesenen Röntgenbildes wird dadurch deutlich verbessert.

Stöße von außen erheblich reduziert wird, indem die Anregung unerwünschter Eigenschwingungen und/oder zusätzlicher Drehimpulse des Ablenkelements 4 um deren Oszillationsachse 17 effizient verhindert wird. Darüber hinaus greifen Kräfte aufgrund von Luftverwirbelungen durch die Schwingbewegung ebenfalls symmetrisch an dem System Ablenkelement/Masseelement 4/23 an, so dass die Anregung der erwähnten unerwünschten Schwindungsmoden unterbleibt. Die Qualität des ausgelesenen Röntgenbildes wird dadurch deutlich verbessert.

## Patentansprüche

1. Vorrichtung zum Auslesen von in einer Speicherleuchtstoffschicht (1) gespeicherten Röntgeninformationen mit
einer Lichtquelle (2) zur Erzeugung eines Stimulationslichtstrahls (3), welcher die Speicherleuchtstoffschicht (1) zur Aussendung von Emissionslicht anregen kann, und
einem Ablenkelement (4) in Form eines Spiegels zum Ablenken des Stimulationslichtstrahls (3) in der Weise, dass der abgelenkte Stimulationslichtstrahl (3') über die Speicherleuchtstoffschicht (1) bewegt wird, **gekennzeichnet durch**
mindestens ein elastisches Element (18, 19), an welchem das Ablenkelement (4) befestigt ist, und
mindestens ein Masseelement (23), durch welches das Ablenkverhalten des Ablenkelements (4) beeinflussbar ist, wobei
- das Masseelement (23) am Ablenkelement (4) und/oder am elastischen Element (19) angebracht ist,
- das Ablenkelement (4) auf einer ersten Seite des elastischen Elements (19) und das Masseelement (23) auf einer der ersten Seite gegenüber liegenden zweiten Seite des elastischen Elements (19) angebracht sind,
- das Ablenkelement (4) als um eine Oszillationsachse (17) oszillierendes Ablenkelement (4) ausgebildet ist und das Masseelement (23) so angeordnet ist, dass der Schwerpunkt der durch Ablenk- und Masseelement (4, 23) gebildeten Gesamtmasse auf der Oszillationsachse (17) zu liegen kommt, und
- das Ablenkelement (4) eine Glasplatte mit aufgebrachter Spiegelfläche aufweist und als Masseelement (23) im Wesentlichen die gleiche Glasplatte eingesetzt ist, wobei das Ablenkelement (4) und das Masseelement (23) jeweils eine rechteckige oder runde Form und eine im Wesentlichen plane Vorder- und Rückseite aufweisen.

2. Vorrichtung nach Anspruch 1, wobei das Ablenkelement (4) und/oder das Masseelement (23) aerodynamisch ausgestaltet ist bzw. sind, wobei die Kanten des Ablenkelements (4) bzw. des Masseelements (23) abgeschrägt sind und/oder ein zwischen dem Ablenkelement (4) und dem Masseelement (23) gebildeter Spalt (24) zumindest im Randbereich geschlossen ist.

3. Vorrichtung nach einem der vorangehenden Ansprüche mit einer Antriebseinrichtung (5) zum Antrieb des Ablenkelements (4) durch Abgabe von Antriebsenergie an das Ablenkelement (4) in Abhängigkeit von einer Lage des abgelenkten Stimulationslichtstrahls (3') und/oder in Abhängigkeit von einer Stellung des Ablenkelements (4).

4. Vorrichtung nach Anspruch 3, wobei die Antriebseinrichtung (5) in der Weise ausgestaltet ist, dass die Abgabe von Antriebsenergie an das Ablenkelement (4) ausgelöst wird, wenn sich der abgelenkte Stimulationslichtstrahl (3') bzw. das Ablenkelement (4) in einer bestimmten Lage bzw. Stellung befindet.

5. Vorrichtung nach einem der vorangehenden Ansprüche mit mindestens einem Sensorelement (10, 11) zur Erfassung der Lage des abgelenkten Stimulationslichtstrahls (3') und/oder mit mindestens einem Aufnehmer zur Erfassung der Stellung des Ablenkelements (4).

6. Verfahren zum Auslesen von in einer Speicherleuchtstoffschicht (1) gespeicherten Röntgeninformationen, wobei ein Stimulationslichtstrahl (3), welcher die Speicherleuchtstoffschicht (1) zur Aussendung von Emissionslicht anregen kann, mit einem Ablenkelement (4) in Form eines Spiegels abgelenkt und dabei über die Speicherleuchtstoffschicht (1) bewegt wird,
**dadurch gekennzeichnet, dass**
das Ablenkverhalten des Ablenkelements (4) durch mindestens ein Masseelement (23) beeinflusst wird, wobei
- das Ablenkelement (4) an mindestens einem elastischen Element (18, 19) befestigt ist,
- das Masseelement (23) am Ablenkelement (4) und/oder am elastischen Element (19) angebracht ist,
- das Ablenkelement (4) auf einer ersten Seite des elastischen Elements (19) und das Masseelement (23) auf einer der ersten Seite gegenüber liegenden zweiten Seite des elastischen Elements (19) angebracht sind,
- das Ablenkelement (4) als um eine Oszillationsachse (17) oszillierendes Ablenkelement (4) ausgebildet ist und das Masseelement (23) so angeordnet ist, dass der Schwerpunkt der durch Ablenk- und Masseelement (4, 23) gebildeten Gesamtmasse auf der Oszillationsachse (17) zu liegen kommt, und
- das Ablenkelement (4) eine Glasplatte mit aufgebrachter Spiegelfläche aufweist und als Masseelement (23) im Wesentlichen die gleiche Glasplatte eingesetzt wird, wobei das Ablenkelement (4) und das Masseelement (23) jeweils eine rechteckige oder runde Form und eine im Wesentlichen plane Vorder- und Rückseite aufweisen.

## Claims

1. Device for reading out X-ray information stored in a storage phosphor layer (1) comprising
a light source (2) for generating a stimulation light beam (3) which can stimulate the storage phosphor layer (1) in order to have it emitting emission light, and
a deflection element (4) in form of a mirror for deflecting the stimulation light beam (3) in such a way that the deflected stimulation light beam (3') is moved across the storage phosphor layer (1),
**characterized by**
at least one elastic element (18, 19) to which the deflection element (4) is attached, and
at least one mass element (23) capable of influencing the deflection behaviour of the deflection element (4), wherein
- the mass element (23) is attached to the deflection element (4) and/or to the elastic element (19),
- the deflection element (4) is provided on a first side of the elastic element (19) and the mass element (23) is provided on a second side of the elastic element (19) which is facing the first side,
- the deflection element (4) is configured in form of a deflection element (4) which is oscillating around an oscillation axis (17) and the mass element (23) is arranged in such a way that the centre of mass of the total mass formed by the deflection element (4) and the mass element (23) is situated on the oscillation axis (17), and
- the deflection element (4) comprises a glass plate with a mirror surface provided onto it and the mass element (23) is essentially the same glass plate, said deflection element (4) and said mass element (23) each having a rectangular or round form and comprising a back side and front side which are essentially planar.

2. Device according to claim 1, wherein the deflection element (4) and/or the mass element (23) is (are) aerodynamically configured, wherein the edges of the deflection element (4) and the mass element (23) are bevelled and/or a gap (24) formed between the deflection element (4) and the mass element (23) is at least closed in the edge area.

3. Device according to any one of the preceding claims comprising a drive equipment (5) for driving the deflection element (4) by releasing drive energy to the deflection element (4) as a function of a position of the deflected stimulation light beam (3') and/or as a function of a location of the deflection element (4).

4. Device according to claim 3, wherein the drive equipment (5) is configured in such a way that the release of drive energy to the deflection element (4) is triggered when the deflected stimulation light beam (3') or the deflection element (4) is in a predetermined position or location, respectively.

5. Device according to any one of the preceding claims comprising at least one detector element (10, 11) for detecting the position of the deflected stimulation light beam (3') and/or comprising at least one sensor for detecting the location of the deflection element (4).

6. Method for reading out X-ray information stored in a storage phosphor layer (1), wherein a stimulation light beam (3) which can stimulate the storage phosphor layer (1) in order to have it emitting emission light, is deflected by means of a deflection element (4) in form of a mirror and is thereby moved across the storage phosphor layer (1),
**characterized in that**
the deflection behaviour of the deflection element (4) is influenced by at least one mass element (23), wherein
- the deflection element (4) is attached to at least one elastic element (18, 19),
- the mass element (23) is attached to the deflection element (4) and/or to the elastic element (19),
- the deflection element (4) is provided on a first side of the elastic element (19) and the mass element (23) is provided on a second side of the elastic element (19) which is facing the first side,
- the deflection element (4) is configured in form of a deflection element (4) which is oscillating around an oscillation axis (17) and the mass element (23) is arranged in such a way that the centre of mass of the total mass formed by the deflection element (4) and the mass element (23) is situated on the oscillation axis (17), and
- the deflection element (4) comprises a glass plate with a mirror surface provided onto it and the mass element (23) is essentially the same glass plate, said deflection element (4) and said mass element (23) each having a rectangular or round form and comprising a back side and front side which are essentially planar.

## Revendications

1. Dispositif de lecture d'informations radiographiques stockées dans une couche luminescente à mémoire (1) comprenant une source de lumière (2) servant à générer un faisceau de lumière de stimulation (3) pouvant stimuler la couche luminescente à mémoire (1) afin de la faire émettre de la lumière d'émission, et
un élément de déviation (4) sous forme d'un miroir servant à dévier le faisceau de lumière de stimulation (3) de façon à ce que le faisceau de lumière de stimulation dévié (3') traverse la couche luminescente à mémoire (1),
**caractérisé par**
au moins un élément élastique (18, 19) auquel est attaché l'élément de déviation (4), et
au moins un élément de masse (23) permettant d'influencer le comportement de déviation de l'élément de déviation (4),
- ledit élément de masse (23) étant attaché à l'élément de déviation (4) et/ou à l'élément élastique (19),
- ledit élément de déviation (4) étant disposé sur une première face de l'élément élastique (19) et ledit élément de masse (23) étant disposé sur une deuxième face de l'élément élastique (19) opposée à ladite première face,
- ledit élément de déviation (4) étant configuré sous forme d'un élément de déviation (4) oscillant autour d'un axe d'oscillation (17) et ledit élément de masse (23) étant disposé de façon à ce que le centre de masse de la masse totale formée par ledit élément de déviation (4) et ledit élément de masse (23) se situe sur l'axe d'oscillation (17), et
- ledit élément de déviation (4) comprenant une plaque de verre comprenant une surface de miroir appliquée sur ladite plaque de verre et la même plaque de verre servant essentiellement comme ledit élément de masse (23), ledit élément de déviation (4) et ledit élément de masse (23) ayant chacun une forme rectangulaire ou ronde et comprenant une face arrière et une face avant qui sont essentiellement planes.

2. Dispositif selon la revendication 1, **caractérisé en ce que** ledit élément de déviation (4) et/ou ledit élément de masse (23) est (sont) configuré(s) de manière aérodynamique, les bords dudit élément de déviation (4) et dudit élément de masse (23) étant biseautés et/ou une fente (24) formée entre ledit élément de déviation (4) et ledit élément de masse (23) étant au moins fermée dans la zone de bord.

3. Dispositif selon l'une quelconque des revendications précédentes, comprenant un élément d'entraînement (5) servant à entraîner ledit élément de déviation (4) en transmettant de l'énergie d'entraînement audit élément de déviation (4) en fonction d'une position du faisceau de lumière de stimulation dévié (3') et/ou en fonction d'une situation dudit élément de déviation (4).

4. Dispositif selon la revendication 3, **caractérisé en ce que** l'élément d'entraînement (5) est configuré de façon à ce que la transmission d'énergie d'entraînement à l'élément de déviation (4) est provoquée lorsque le faisceau de lumière de stimulation dévié (3') ou l'élément de déviation (4) se trouve dans respectivement une position ou situation prédéterminée.

5. Dispositif selon l'une quelconque des revendications précédentes, comprenant au moins un élément de détecteur (10, 11) servant à détecter la position du faisceau de lumière de stimulation dévié (3') et/ou comprenant au moins un détecteur servant à détecter la situation de l'élément de déviation (4).

6. Procédé de lecture d'informations radiographiques stockées dans une couche luminescente à mémoire (1), **caractérisé en ce qu'**un faisceau de lumière de stimulation (3) pouvant stimuler la couche luminescente à mémoire (1) afin de la faire émettre de la lumière d'émission est dévié par un élément de déviation (4) sous forme de miroir et traverse ainsi ladite couche luminescente à mémoire (1),
**caractérisé en ce que**
le comportement de déviation de l'élément de déviation (4) est influencé par au moins un élément de masse (23),
- ledit élément de déviation (4) étant attaché à au moins un élément élastique (18, 19),
- ledit élément de masse (23) étant attaché à l'élément de déviation (4) et/ou à l'élément élastique (19),
- ledit élément de déviation (4) étant disposé sur une première face de l'élément élastique (19) et ledit élément de masse (23) étant disposé sur une deuxième face de l'élément élastique (19) opposée à ladite première face,
- ledit élément de déviation (4) étant configuré sous forme d'un élément de déviation (4) oscillant autour d'un axe d'oscillation (17) et ledit élément de masse (23) étant disposé de façon à ce que le centre de masse de la masse totale formée par ledit élément de déviation (4) et ledit élément de masse (23) se situe sur l'axe d'oscillation (17), et
- ledit élément de déviation (4) comprenant une plaque de verre comprenant une surface de miroir appliquée sur ladite plaque de verre et la même plaque de verre servant essentiellement comme ledit élément de masse (23), ledit élément de déviation (4) et ledit élément de masse (23) ayant chacun une forme rectangulaire ou ronde et comprenant une face arrière et une face avant qui sont essentiellement planes.
